# FASCICULE DE BREVET EUROPEEN

(11) **EP 3 835 881 B1**
(45) Date de publication et mention de la délivrance du brevet: **19.11.2025**
(21) Numéro de dépôt: 19214879.9
(22) Date de dépôt: 10.12.2019
(51) Int. Cl.: G04B 31/008, G04B 31/06, G04D 3/00, B28B 3/02, B30B 11/04, C04B 35/48, B30B 15/02

(54) **PIERRE, NOTAMMENT POUR UN MOUVEMENT D'HORLOGERIE, ET SON PROCÉDÉ DE FABRICATION**
STEIN, INSBESONDERE FÜR EIN UHRWERK, UND SEIN HERSTELLUNGSVERFAHREN
JEWEL, PARTICULARLY FOR CLOCKWORK, AND METHOD FOR MANUFACTURING SAME

(43) Date de publication de la demande: 16.06.2021
(73) Titulaire: Comadur S.A., 2400 Le Locle (CH)
(72) Inventeur: BESUTTI, Bruno, 25140 Charquemont (FR); RETROUVEY, Sébastien, 39380 Chissey sur Loue (FR); MIDOL, Sébastien, 25430 Sancey (FR)
(74) Mandataire: ICB SA

(56) Documents cités:
- EP-A1- 3 483 665

## Description

### Domaine de l'invention

L'invention porte sur un procédé de fabrication d'une pierre, notamment pour un mouvement d'horlogerie, par exemple une pierre industrielle ou une céramique technique.

L'invention porte encore sur un dispositif de pressage pour la mise en œuvre du procédé.

### Arrière-plan de l'invention

Dans l'état de la technique de l'horlogerie, les pierres de type rubis, ZrO2 ou saphir, sont notamment utilisées pour former des contre-pivots ou des éléments de guidage, appelés coussinets, dans des pièces d'horlogerie. Ces contre-pivots et éléments de guidage sont destinés à entrer en contact avec des pivots afin de rendre ces derniers mobiles en rotation et ce, avec un frottement minimal. Ainsi, ils forment, par exemple, tout ou partie d'un palier d'un axe monté en rotation. Les éléments de guidage comprennent généralement un trou traversant pour y insérer l'axe du pivot.

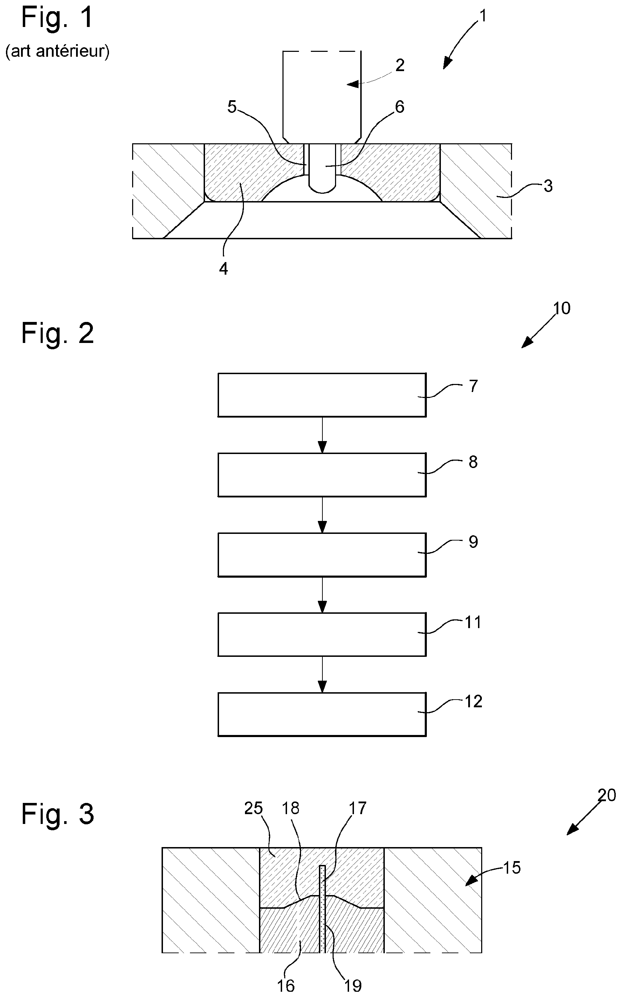

La figure 1 est une représentation d'un palier 1 pour un pivot 2 d'un mobile tournant selon l'art antérieur. Le palier 1 comprend un bloc de palier 3, dans lequel est agencé un élément de guidage 4, qui est ici une pierre. La pierre comporte un trou traversant 5 pour recevoir l'extrémité 6 du pivot 2. Ainsi, le pivot 2 peut tourner dans le trou 5.

En principe, on utilise des pierres industrielles synthétiques dans les mouvements horlogers. On connait en particulier le procédé de type Verneuil pour fabriquer des pierres de type monocristalline.

Il existe aussi les pierres de type poly-cristalline, que l'on fabrique par pressage d'un précurseur en vue de l'obtention d'un corps vert de la future pierre à partir d'un outil de pressage. Les pierres sont ensuite frittées, usinées pour obtenir une forme finie aux dimensions désirées. En particulier, concernant les éléments de guidage en pierre poly-cristalline, l'outil de pressage est par exemple pourvu d'un fil participant à l'édification d'une ébauche de trou. Un exemple de ce type de procédé de fabrication de pierre de type poly-cristalline munie d'un trou est décrit dans la demande de brevet EP 3 483 665.

Cependant, ces techniques d'usinage de ces pierres poly-cristallines, ne permettent pas d'obtenir des trous de petite dimensions. En particulier, on peut aller jusqu'à des diamètres de 0.11mm, grâce aux techniques usuelles connues aujourd'hui. Mais il n'est pas possible de descendre en-dessous de cette valeur. Pour pouvoir descendre en-dessous, il faut avoir recours à des technologies laser, qui sont difficiles à mettre en œuvre industriellement, et qui ne permettent pas d'avoir directement un état de surface de qualité du trou.

### Résumé de l'invention

Le but de la présente invention est de palier tout ou partie les inconvénients cités précédemment, en proposant un procédé de fabrication d'une pierre à grande échelle permettant la réalisation d'un trou de très petit diamètre.

A cet effet, l'invention porte sur un procédé de fabrication d'une pierre de type poly-cristalline, notamment pour une pièce d'horlogerie, la pierre comprenant par exemple du poly-rubis de type al2O3Cr ou de la céramique Zircone de type ZrO2, le procédé comprenant une première étape de réalisation d'un précurseur.

Le procédé est remarquable en ce qu'il comprend une deuxième étape de pressage du précurseur afin de former un corps, le pressage étant opéré à l'aide d'un dispositif de pressage muni d'une matrice supérieure et d'une matrice inférieure définissant un espace de pressage dans lequel le précurseur est disposé, le dispositif étant muni d'un fil traversant au moins en partie la matrice inférieure pour déboucher dans l'espace de pressage, la matrice inférieure pouvant coulisser autour du fil, le pressage étant opéré par le rapprochement de la matrice inférieure et de la matrice supérieure pour former un corps comprenant une face inférieure munie d'un trou.

Ainsi, ce procédé permet de former des corps verts, qui, après frittage et usinage, donneront des pierres avec un trou de très petit diamètre, notamment inférieur ou égal à 0.1mm. Ce procédé est en outre mis en œuvre par un dispositif de pressage facile à utiliser, le dispositif de pressage utilisé étant un perfectionnement d'un dispositif utilisé pour la fabrication d'un corps vert. L'invention permet donc de fabriquer ces pierres industriellement à grande échelle, sans avoir recours à des systèmes onéreux et compliqués à mettre en œuvre.

Selon un mode de réalisation particulier de l'invention, l'étape de pressage est effectuée par le déplacement de la matrice inférieure vers la matrice supérieure autour du fil fixe.

Selon un mode de réalisation particulier de l'invention, lors du pressage, une face supérieure sensiblement plane du corps est formée, la matrice supérieure étant munie d'une surface sensiblement plane.

Selon un mode de réalisation particulier de l'invention, la matrice supérieure est fixe lors du pressage.

Selon un mode de réalisation particulier de l'invention, on forme un évasement autour du trou sur sa face inférieure lors de l'étape de pressage, la matrice inférieure étant en outre munie d'une partie bombée.

Selon un mode de réalisation particulier de l'invention, l'évasement a une forme conique, arrondie, ou en plateau, la partie bombée de la matrice inférieure ayant une partie bombée correspondante autour du fil.

Selon un mode de réalisation particulier de l'invention, la matrice supérieure reste fixe lors du pressage.

Selon un mode de réalisation particulier de l'invention, le procédé comprend une troisième étape de frittage dudit corps afin de former le corps minéral.

Selon un mode de réalisation particulier de l'invention, le procédé comprend une quatrième étape d'usinage pour tailler la pierre à des dimensions prédéfinies, notamment pour former un trou traversant.

Selon un mode de réalisation particulier de l'invention, le procédé comprend une cinquième étape de finition, par exemple un rodage et/ou un brossage et/ou un polissage du corps minéral.

L'invention porte encore sur un dispositif de pressage pour la fabrication d'une pierre, notamment pour une pièce d'horlogerie, le dispositif comprenant un carter définissant un logement, une matrice supérieure et une matrice inférieure configurées pour pouvoir se déplacer dans le logement, les matrices définissant un espace de pressage dans lequel un précurseur peut être disposé, le dispositif étant muni d'un fil traversant au moins en partie la matrice inférieure pour déboucher dans l'espace de pressage, le fil étant fixe par rapport à la matrice inférieure et centré sur la collerette de la matrice supérieure, la matrice inférieure comprenant un orifice de réception du fil, la matrice inférieure étant apte à coulisser autour du fil.

Selon un mode de réalisation particulier de l'invention, la matrice inférieure comprend une partie bombée pour former un évasement autour du trou sur la face inférieure du corps.

Selon un mode de réalisation particulier de l'invention, l'évasement a une forme conique, arrondie, ou en plateau.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation schématique d'un palier pour pivot selon un mode de réalisation connu de l'état de l'art ;
- la figure 2 est un schéma synoptique d'un procédé de réalisation d'une pierre selon l'invention ;
- la figure 3 est une représentation schématique d'une partie d'un dispositif de pressage selon l'invention ;
- la figure 4 est une représentation schématique de la partie de la figure 4 avec le précurseur ;
- la figure 5 est une représentation schématique du dispositif de pressage selon l'invention ;
- la figure 6 est une représentation schématique du dispositif de pressage selon l'invention pendant le pressage ;
- la figure 7 est une représentation schématique d'un premier mode de réalisation d'un corps vert obtenu après l'étape de pressage du procédé selon l'invention ;
- la figure 8 est une représentation schématique d'un deuxième mode de réalisation d'un corps vert obtenu après l'étape de pressage du procédé selon l'invention ;
- la figure 9 est une représentation schématique d'un troisième mode de réalisation d'un corps vert obtenu après l'étape de pressage du procédé selon l'invention ;
- la figure 10 est une représentation schématique d'une pierre obtenue grâce au procédé selon l'invention ;
- la figure 11 est une représentation schématique d'un système de fabrication d'une pierre comprenant un dispositif de pressage selon l'invention.

### Description détaillée des modes de réalisation préférés

Comme expliqué ci-dessus, l'invention se rapporte à un procédé de fabrication 10 d'une pierre susceptible de former un élément de guidage d'une pièce d'horlogerie. La pierre est par exemple destinée à entrer en contact avec un pivot, appelé également tourillon, par exemple d'un axe de balancier, afin de rendre ce dernier mobile en rotation avec un frottement minimal. On comprend donc que la présente invention permet notamment de réaliser une pierre pouvant former tout ou partie d'un palier d'un axe monté en rotation, tel que celui représenté sur la figure 1.

La pierre est formée à partir d'un précurseur, modelé en corps vert, qui devient un corps minéral de type poly-cristallin pour le saphir, le corps comprenant par exemple du poly-rubis de type al2O3Cr ou de la céramique Zircone de type ZrO2. Le corps minéral est taillé pour devenir la pierre finale.

Dans le mode de réalisation 5 du procédé, représenté sur la figure 2, un tel procédé comporte une première étape 7 de réalisation d'un précurseur à partir d'un mélange d'au moins un matériau en poudre avec un liant. Ce matériau peut être, de manière non limitative et non exhaustive, de la céramique. Cette étape 7 est destinée à former un précurseur à partir d'une poudre à base de céramique prise dans le liant.

Dans ce contexte, la poudre à base de céramique peut comporter au moins un oxyde métallique, un nitrure métallique ou un carbure métallique. A titre d'exemple, la poudre à base de céramique peut comporter de l'oxyde d'aluminium afin de former du saphir synthétique ou un mélange d'oxyde d'aluminium et d'oxyde de chrome afin de former du rubis synthétique, ou encore de l'oxyde de zirconium. De plus, le liant peut être de natures variées comme, par exemple, de types polymères ou de types organiques.

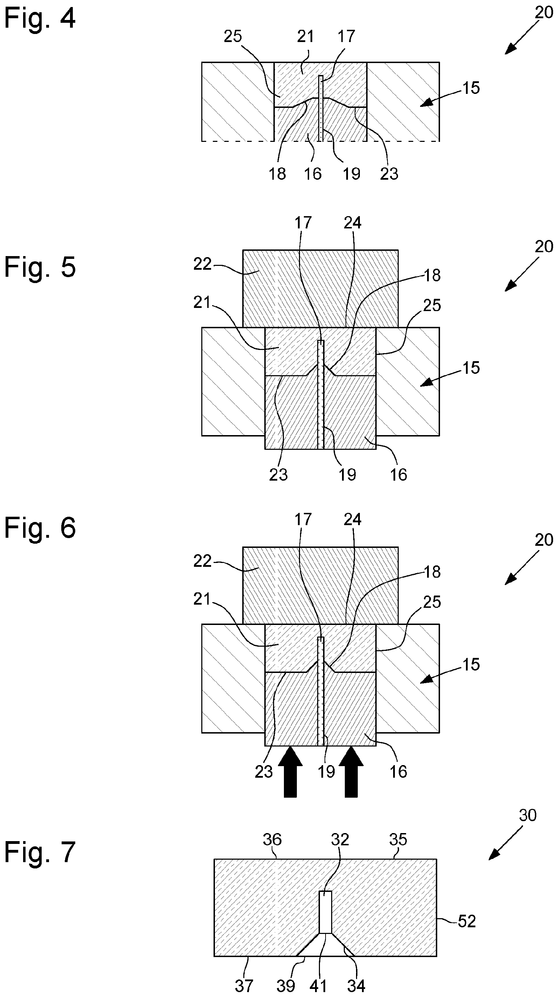

Le mode de réalisation comporte ensuite une deuxième étape de pressage 8 du précurseur à partir d'une matrice supérieure et d'une matrice inférieure d'un dispositif de pressage, afin de former un corps vert de la future pierre. L'étape de pressage est représentée sur les figures 4 à 7, qui sont décrites plus loin dans la description. L'étape de pressage 8 permet d'obtenir un corps vert muni d'un trou. On comprend donc que la forme du trou est apportée par la forme du fil 17 de la matrice inférieure 16 du dispositif de pressage 20.

Le procédé comprend une troisième étape de frittage 9 dudit corps vert afin de former le corps minéral de la future pierre dans ledit au moins un matériau. Le matériau peut être, ainsi que nous l'avons évoqué précédemment, de la céramique. Autrement dit, cette étape 9 est destinée à fritter le corps vert afin de former un corps en céramique de la future pierre percée. Préférentiellement selon l'invention, l'étape de frittage 9 peut comporter une pyrolyse, par exemple par déliantage thermique.

Le procédé 10 comprend une quatrième étape d'usinage 11, notamment pour tailler le corps minéral à des dimensions prédéfinies, en particulier afin d'obtenir un trou traversant la pierre. L'usinage consiste par exemple à raboter la face supérieure du corps. Ainsi, en supprimant une partie supérieure du corps, on ouvre le trou dans la face supérieure du corps pour obtenir un trou traversant depuis la face inférieure. L'étape d'usinage 11 comprend aussi une sous-étape de façonnage de la face inférieure pour obtenir une épaisseur de pierre prédéfinie.

Le procédé comprend une cinquième étape de finition 12, par exemple un rodage et/ou un brossage et/ou un polissage du corps minéral. Cette finition permet de donner à la pierre un état de surface compatible avec son utilisation. Une telle étape de finition permet aussi l'ajustage des cotes finales et/ou le retrait d'arêtes et/ou la modification locale de la rugosité.

Sur les figures 3 à 6, le dispositif de pressage 20 comprend un carter 15 muni d'une chambre fermée par une matrice supérieure 22, et à l'intérieur de laquelle une matrice inférieure 16 peut coulisser. Chaque matrice 16, 22 est fixée sur une presse double effet. La matrice supérieure 22 et la matrice inférieure 16 définissent un espace de pressage 25 dans lequel le précurseur 21 est disposé.

Sur les figures 3 et 4, seule la matrice inférieure 16 est représentée. Le dispositif 10 est en outre muni d'un fil traversant 17 au moins en partie la matrice inférieure 16 pour déboucher dans l'espace de pressage 25. Le fil 17 est fixe par rapport à la matrice inférieure 16 et centré sur la matrice inférieure 16. La matrice inférieure 16 comprend un orifice de passage 19 du fil 17. Ainsi, la matrice inférieure 16 coulisse autour du fil 17. Le fil 17 est donc immobile par rapport à la matrice inférieure 16.

La matrice inférieure 16 est en outre munie d'une partie bombée 18. Selon un premier mode de réalisation, représenté sur la figure 4, la partie bombée 18 est de forme conique avec un grand angle d'ouverture, par exemple compris dans un intervalle allant de 60° à 140°, de préférence compris entre 90° et 120°. La partie bombée 18 est centrée sur la matrice inférieure 16, de sorte que le passage 19 et donc le fil 17 soient agencés au sommet de la partie bombée 18.

Un deuxième mode de réalisation de la matrice inférieur comporte une partie bombée de forme arrondie. Dans un troisième mode de réalisation, la partie bombée a une forme de plateau à bord arrondi. Le deuxième et le troisième mode de réalisation de la matrice inférieure ne sont pas représentés sur les figures, mais la forme de la partie bombée correspond à la forme de l'évasement 34, 38, 48 des corps 30, 33, 43 correspondant des figures 7 à 9.

Le précurseur 21 est positionné dans l'espace de pressage 25, comme le montre la figure 4. Puis, on positionne la matrice supérieure 22 au-dessus du logement pour le fermer.

La matrice supérieure 22 comprend une surface sensiblement plane. Ainsi, lors du pressage, la face supérieure du corps vert est sensiblement plane.

Le pressage 8 est effectué par le rapprochement de la matrice supérieure 22 et de la matrice inférieure 16, de manière à comprimer le précurseur 21 dans l'espace de pressage 25. De préférence, le pressage 8 est effectué par le déplacement de la matrice inférieure 16 vers la matrice supérieure 22 autour du fil fixe 17. Ainsi, le précurseur 21 est tassé contre la matrice supérieur 22 pour donner au corps vert une forme correspondant à l'espace de pressage 25 une fois les deux matrices 16, 22 rapprochées. Le corps vert prend donc la forme des matrices supérieure 22 et inférieure 16 pour les faces supérieure 36 et inférieure 37 du corps.

Ainsi, une telle étape de pressage 8 est destinée à compresser le précurseur 21 afin de former le corps vert de la future pierre percée avec un trou sur la face inférieure 37. De préférence, la matrice supérieure 22 reste fixe et ne se déplace pas sous l'effet de la pression de la matrice inférieure 16 pendant le pressage 8.

La figure 7 montre le corps vert 30 ainsi obtenu. Le corps vert 30 comprend une face supérieure 36 plane. Le corps vert 30 comprend une face inférieure 37 munie d'un trou 32. Le trou 32 a été formé par le fil pendant le pressage. Le trou 32 a une forme cylindrique. Le trou 32 a une profondeur choisie. A ce stade, le trou 32 n'est pas traversant, mais comporte un fond. Grâce au procédé, on obtient un trou 32 de très petit diamètre, qui peut notamment être inférieur à 0.1mm, voire inférieur à 0.05mm.

Dans ce mode de réalisation, la face inférieure 37 du corps 30 est dotée d'une partie évasée 34, la partie évasée 34 bordant le trou 32. La partie évasée 34 a une forme conique. Cet évasement forme alors un cône d'engagement de la pierre percée 40. Le cône 12 est de préférence circulaire. Le cône a une première ouverture 39 à sa base et une deuxième ouverture 41 à son sommet. La première ouverture 39 est plus grande que la deuxième 41, et est formée dans la face inférieure 37 du corps 30. La liaison du cône 34 et du trou 32 s'effectue par la deuxième ouverture 41 pour former une arête. Ainsi, l'évasement 34 permet d'insérer facilement le pivot d'un axe d'une pièce mobile en rotation, notamment en cas de choc. L'angle du cône est choisi pour éviter que l'arête formée par le haut du cône et le trou 8 ne soit trop saillante. On choisit par exemple un angle compris entre 60° et 140°, de préférence compris entre 90° et 120°.

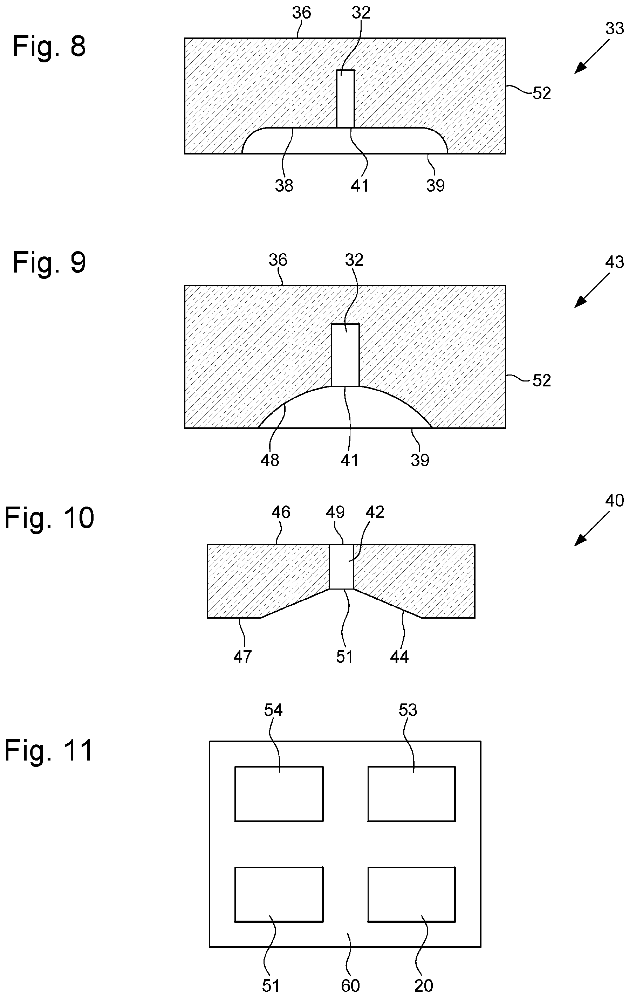

Sur la figure 8, un deuxième mode de réalisation d'un corps vert comprend une partie évasée de forme arrondie, qui présente un rayon de courbure. La forme arrondie borde le trou du corps, en étant centré autour de lui. Le trou est agencé dans le fond de l'évasement.

Un troisième mode de réalisation du corps vert, représenté sur la figure 9, comprend un évasement en forme de plateau à bord arrondi.

Le corps vert 30 une fois formé, est soumis à l'étape de frittage pour obtenir un corps minéral, qui conserve une forme identique.

La figure 10 montre un exemple de pierre 40 obtenue après toutes les étapes du procédé 10. Une telle pierre 40 peut être utilisée comme élément de guidage monté dans un palier, tel que celui de la figure 1. Toutefois, une telle pierre ne saurait se limiter au domaine horloger et peut s'appliquer à tout élément monté mobile par rapport à un palier, ou à une pierre industrielle (buse jet d'eau, etc.), ou une céramique technique (isolateur, etc.). La pierre 40 comprend les caractéristiques décrites dans le procédé précédemment. La pierre 40 est traversée par un trou 42 destiné à recevoir un pivot. La pierre 40 comporte une face supérieure 46 et une face inférieure 47 dont l'une comprend un élément fonctionnel, ici un cône 44, communiquant avec le trou traversant 42. La face supérieure 36 est sensiblement plane et comprend l'autre côté du trou traversant 42. Autrement dit, le trou 42 communique avec la face supérieure 46 et avec la face inférieure 47. Un tel trou traversant 32 comprend une première ouverture 49 définie dans le corps minéral et débouchant dans la face inférieure 37. Le trou traversant 32 comprend aussi une seconde ouverture 51 définie dans le corps minéral 30 et débouchant dans la face supérieure 36. Une telle pierre a, par exemple, une épaisseur de 0.18mm et un diamètre de 0.8mm, et un trou de diamètre inférieur à 0.1mm. De telles dimensions permettent d'utiliser des pivots de très faible diamètre. De préférence, la face supérieure 36 entière a une hauteur identique. Ainsi, la face supérieure 36 du corps est plane, en-dehors du trou 32. On peut aussi enlever de la matière de la face supérieure 36 lors de l'étape d'usinage, pour obtenir une épaisseur de pierre souhaitée.

L'étape d'usinage 11 peut aussi comprendre une sous-étape de rabotage de la face périphérique 52 du corps minéral 30, afin de lui donner un diamètre déterminé. L'étape d'usinage 11 peut aussi comprendre une sous-étape de rabotage de la face inférieure 37, voire d'élargissement ou de taillage du trou 32.

Bien entendu, la présente invention ne se limite pas à l'exemple illustré mais est susceptible de diverses variantes et modifications qui apparaîtront à l'homme de l'art. En particulier, d'autres types d'éléments fonctionnels formés lors de l'étape de pressage peuvent être envisagés avantageusement selon l'invention.

En référence à la figure 11, l'invention porte aussi sur un système de fabrication 60 de la pierre. Ce système 60 comprend les différents dispositifs suivants :
- un dispositif de réalisation 51 d'un précurseur à partir d'un mélange d'au moins un matériau en poudre avec un liant ;
- un dispositif de pressage 20 du matériau précurseur tel que défini précédemment ;
- un dispositif de frittage 53 dudit corps vert, et
- un dispositif d'usinage 54 du corps 30 de la future pierre issue du frittage du corps vert.

On notera qu'au moins deux de ces dispositifs 20, 51, 53 et 54 peuvent former ensemble une même entité du système 60. Un tel système 60 est apte à mettre en œuvre le procédé de fabrication de la pierre 40 représentée sur la figure 10, en passant par les étapes de la figure 2.

## Revendications

1. Procédé (10) de fabrication d'une pierre (40) de type poly-cristalline, notamment pour une pièce d'horlogerie, la pierre (40) comprenant par exemple du poly-rubis de type al2O3Cr ou de la Zircone de type ZrO2, le procédé comprenant une première étape de réalisation (7) d'un précurseur (21), le procédé comprenant une deuxième étape de pressage (8) du précurseur (21) afin de former un corps (30), le pressage (8) étant opéré à l'aide d'un dispositif de pressage (20) muni d'une matrice supérieure (22) et d'une matrice inférieure (16) définissant un espace de pressage (25) dans lequel le précurseur (21) est disposé, le dispositif (20) étant muni d'un fil (17) traversant au moins en partie la matrice inférieure (16) pour déboucher dans l'espace de pressage (25), la matrice inférieure (16) pouvant coulisser autour du fil (17), le pressage (8) étant opéré par le rapprochement de la matrice inférieure (16) et de la matrice supérieure (22) pour former un corps (30) comprenant une face inférieure (37) munie d'un trou (32).

2. Procédé selon la revendication 1, **caractérisé en ce que** le pressage (8) est opéré par le déplacement de la matrice inférieure (16) vers la matrice supérieure (22).

3. Procédé selon la revendication 1 ou 2, **caractérisé en ce que** lors du pressage (8), une face supérieure sensiblement plane du corps est formée, la matrice supérieure (22) étant munie d'une surface sensiblement plane.

4. Procédé selon l'une, quelconque, des revendications précédentes, **caractérisé en ce que** la matrice supérieure (22) est fixe lors du pressage (8).

5. Procédé selon l'une, quelconque, des revendications précédentes, **caractérisé en ce qu'**on forme un évasement (34) autour du trou (32) sur sa face inférieure (37), lors de l'étape de pressage (8), la matrice inférieure (16) étant en outre munie d'une partie bombée (18).

6. Procédé selon la revendication 5, **caractérisé en ce que** l'évasement (34) a une forme conique, arrondie, ou en plateau, la partie bombée (18) de la matrice inférieure (16) ayant une partie bombée correspondante autour du fil (17).

7. Procédé selon l'une, quelconque, des revendications précédentes, **caractérisé en ce que** le procédé (10) comprend une troisième étape de frittage (9) dudit corps (30) afin de former un corps minéral.

8. Procédé selon la revendication 7, **caractérisé en ce que** le procédé (10) comprend une quatrième étape d'usinage (11) pour tailler la pierre à des dimensions prédéfinies, notamment pour former un trou traversant (32).

9. Procédé selon la revendication 8, **caractérisé en ce que** le procédé (10) comprend une cinquième étape de finition (12), par exemple un rodage et/ou un brossage et/ou un polissage du corps minéral.

10. Dispositif de pressage (20) pour la fabrication d'une pierre (30), notamment pour une pièce d'horlogerie, le dispositif (60) comprenant une matrice supérieure (22) et une matrice inférieure (16) configurées pour pouvoir se déplacer l'un par rapport à l'autre dans un logement, les matrices (16, 22) définissant un espace de pressage (25) dans lequel un précurseur (21) peut être disposé, dispositif (20) étant muni d'un fil (17) traversant au moins en partie la matrice inférieure (16) pour déboucher dans l'espace de pressage, la matrice inférieure (16) pouvant coulisser autour du fil (17).

11. Dispositif de pressage (20) selon la revendication 10, **caractérisé en ce que** la matrice inférieure (16) comprend une partie bombée (18) pour former un évasement (34, 38, 48) autour du trou (32) sur la face inférieure (37) du corps (30, 33, 43).

12. Dispositif de pressage (20) selon la revendication 11, **caractérisé en ce que** l'évasement (34, 38, 48) a une forme conique, arrondie, ou en plateau.

## Patentansprüche

1. Verfahren (10) zur Herstellung eines polykristallinen Steins (40), insbesondere für eine Uhr, wobei der Stein (40) beispielsweise polykristallinen Rubin des Typs Al₂O₃:Cr oder Zirkonia des Typs ZrO₂ umfasst, wobei das Verfahren einen ersten Herstellungsschritt (7) zur Bereitstellung eines Vorprodukts (21) umfasst, wobei das Verfahren einen zweiten Pressschritt (8) des Vorprodukts (21) zur Bildung eines Körpers (30) umfasst, wobei das Pressen (8) mittels einer Pressvorrichtung (20) mit einer oberen Matrize (22) und einer unteren Matrize (16) erfolgt, die einen Presshohlraum (25) definieren, in dem das Vorprodukt (21) angeordnet ist, wobei die Vorrichtung (20) mit einem Dorn (17) versehen ist, der zumindest abschnittsweise die untere Matrize (16) durchsetzt und in den Presshohlraum (25) mündet, wobei die untere Matrize (16) um den Dorn (17) verschieblich geführt ist, und wobei das Pressen (8) durch Annähern der unteren Matrize (16) an die obere Matrize (22) erfolgt, um einen Körper (30) zu formen, der eine Unterseite (37) mit einer Bohrung (32) aufweist.

2. Verfahren nach Anspruch 1, **dadurch gekennzeichnet, dass** das Pressen (8) durch Verschieben der unteren Matrize (16) in Richtung der oberen Matrize (22) erfolgt.

3. Verfahren nach Anspruch 1 oder 2, **dadurch gekennzeichnet, dass** beim Pressen (8) eine im Wesentlichen plane Oberseite des Körpers gebildet wird, wobei die obere Matrize (22) eine im Wesentlichen plane Oberfläche aufweist.

4. Verfahren nach einem der vorhergehenden Ansprüche, **dadurch gekennzeichnet, dass** die obere Matrize (22) während des Pressens (8) feststehend ist.

5. Verfahren nach einem der vorhergehenden Ansprüche, **dadurch gekennzeichnet, dass** während des Pressschritts (8) um die Bohrung (32) an der Unterseite (37) eine Ansenkung (34) ausgebildet wird, wobei die untere Matrize (16) ferner einen gewölbten Abschnitt (18) aufweist.

6. Verfahren nach Anspruch 5, **dadurch gekennzeichnet, dass** die Ansenkung (34) konisch, verrundet oder plateauförmig ausgebildet ist, wobei der gewölbte Abschnitt (18) der unteren Matrize (16) einen entsprechenden gewölbten Bereich um den Dorn (17) aufweist.

7. Verfahren nach einem der vorhergehenden Ansprüche, **dadurch gekennzeichnet, dass** das Verfahren (10) einen dritten Sinterschritt (9) des genannten Körpers (30) umfasst, um einen mineralischen Körper zu erhalten.

8. Verfahren nach Anspruch 7, **dadurch gekennzeichnet, dass** das Verfahren (10) einen vierten Bearbeitungsschritt (11) umfasst, um den Stein auf vordefinierte Abmessungen zu bringen, insbesondere zur Ausbildung einer Durchgangsbohrung (32).

9. Verfahren nach Anspruch 8, **dadurch gekennzeichnet, dass** das Verfahren (10) einen fünften Schritt der Endbearbeitung (12) umfasst, beispielsweise Läppen und/oder Bürsten und/oder Polieren des mineralischen Körpers.

10. Pressvorrichtung (20) zur Herstellung eines Steins (30), insbesondere für eine Uhr, wobei die Vorrichtung (20) eine obere Matrize (22) und eine untere Matrize (16) umfasst, die in einem Gehäuse derart geführt sind, dass sie relativ zueinander bewegbar sind, wobei die Matrizen (16, 22) einen Presshohlraum (25) definieren, in dem ein Vorprodukt (21) anordenbar ist, wobei die Vorrichtung (20) mit einem Dorn (17) versehen ist, der zumindest abschnittsweise die untere Matrize (16) durchsetzt und in den Presshohlraum mündet, und wobei die untere Matrize (16) um den Dorn (17) verschieblich geführt ist.

11. Pressvorrichtung (20) nach Anspruch 10, **dadurch gekennzeichnet, dass** die untere Matrize (16) einen gewölbten Abschnitt (18) aufweist, um an der Unterseite (37) des Körpers (30, 33, 43) um die Bohrung (32) eine Ansenkung (34, 38, 48) auszubilden.

12. Pressvorrichtung (20) nach Anspruch 11, **dadurch gekennzeichnet, dass** die Ansenkung (34, 38, 48) konisch, verrundet oder plateauförmig ausgebildet ist.

## Claims

1. Method (10) for manufacturing a jewel (40) of the polycrystalline type, in particular for a timepiece, the jewel (40) comprising, for example, poly-ruby of the type al2O3Cr or Zirconia of the type ZrO2, the method comprising a first step (7) of producing a precursor (21), the method comprising a second step (8) of pressing the precursor (21) in order to form a body (30), the pressing (8) being carried out using a pressing device (20) provided with an upper die (22) and a lower die (16) defining a pressing space (25) in which the precursor (21) is disposed, the device (20) being provided with a wire (17) passing through at least part of the lower die (16) to open out into the pressing space (25), the lower die (16) being capable of sliding about the wire (17), the pressing (8) taking place by bringing the lower die (16) and the upper die (22) closer to one another to form a body (30) comprising a bottom face (37) provided with a hole (32).

2. Method according to claim 1, **characterised in that** the pressing (8) is carried out by displacing the lower die (16) towards the upper die (22).

3. Method according to claim 1 or 2, **characterised in that** during pressing (8), a substantially planar top face of the body is formed, the upper die (22) being provided with a substantially planar surface.

4. Method according to any one of the preceding claims, **characterised in that** the upper die (22) is stationary during the pressing step (8).

5. Method according to any one of the preceding claims, **characterised in that** a flaring (34) is formed about the hole (32) on the bottom face (37) thereof during the pressing step (8), the lower die (16) being furthermore provided with a domed part (18).

6. Method according to claim 5, **characterised in that** the flaring (34) has a conical, rounded or plateau shape, the domed part (18) of the lower die (16) having a corresponding domed part about the wire (17).

7. Method according to any one of the preceding claims, **characterised in that** the method (10) comprises a third step (9) of sintering said body (30) in order to form a mineral body.

8. Method according to claim 7, **characterised in that** the method (10) comprises a fourth machining step (11) to cut the jewel to predefined dimensions, in particular to form a through-hole (32).

9. Method according to claim 8, **characterised in that** the method (10) comprises a fifth finishing step (12), for example for lapping and/or brushing and/or polishing the mineral body.

10. Pressing device (20) for manufacturing a jewel (30), in particular for a timepiece, the device (60) comprising an upper die (22) and a lower die (16) configured such that one can move relative to the other inside a housing, the dies (16, 22) defining a pressing space (25) in which a precursor (21) can be disposed, the device (20) being provided with a wire (17) passing through at least part of the lower die (16) to open out into the pressing space, the lower die (16) being capable of sliding about the wire (17).

11. Pressing device (20) according to claim 10, **characterised in that** the lower die (16) comprises a domed part (18) to form a flaring (34, 38, 48) about the hole (32) on the bottom face (37) of the body (30, 33, 43).

12. Pressing device (20) according to claim 11, **characterised in that** the flaring (34, 38, 48) has a conical, rounded or plateau shape.
